# EUROPÄISCHE PATENTANMELDUNG

(11) **EP 4 752 657 A1**
(43) Veröffentlichungstag der Anmeldung: **03.06.2026**
(21) Anmeldenummer: 24216203.0
(22) Anmeldetag: 28.11.2024
(51) Int. Cl.: G05B 23/02

(54) **VERFAHREN ZUR UNTERSTÜTZUNG FÜR EINE EINRICHTUNG EINER ANWENDUNGSSPEZIFISCHEN APPLIKATION**

(71) Anmelder: Siemens Aktiengesellschaft, 80333 München (DE)
(72) Erfinder: Gabriel, Gino, 09112 Chemnitz (DE); Griessbach, Gunter, 09423 Gelenau (DE); Mauersberger, Max André, 09221 Neukirchen/Erzgebirge (DE)
(74) Vertreter: Siemens Patent Attorneys

(57) **Zusammenfassung**

Verfahren zur Unterstützung für eine Einrichtung einer anwendungsspezifischen Applikation (App), welche in einem Modul (1) für die Auswertung und/oder Überwachung sequenzieller Daten implementiert ist, weiterhin wird ein KI-Microcontroller (3) mit einen KI-Algorithmus betrieben, wobei das Verfahren folgende Schritte umfasst:
es wird ein Vorbereitungsmodus (VM) abgearbeitet, wobei
- eine Parametrierung (PM) des Moduls (1) hinsichtlich des Sensortyps und des Messverfahrens durchgeführt wird,
- ein Referenzdatensatz (RD) an Messwerten für einen Sollzustand einer zu überwachenden Anlage wird aufgenommen,
- es werden Schwellwerte (SW) vorgegeben, welche die Messwerte (Mi) im Sollzustand nicht überschreiten sollen, wobei mit den Schwellwerten (SW) ein Toleranzband (TB) erstellt wird,

es wird ein Überwachungsmodus (UM) abgearbeitet,
- die Applikation (App) wird in dem Überwachungsmodus (UM) betrieben und aktuelle Messwerte (Mi) werden aufgenommen,
- wobei dabei jeder Messwert (Mi) automatisiert mit einer Marke (MTi,MTa,MTb) versehen wird, wobei dies in einer Datenvorverarbeitung (DV) durchgeführt wird, die Marken (MTi,MTa,MTb) an den Messwerten (Mi) werden bei einem anschließenden Labeln genutzt, um das Labeln zu vereinfachen.

## Beschreibung

Die Erfindung betrifft ein Verfahren zur Unterstützung für eine Einrichtung einer anwendungsspezifischen Applikation, welche in einem Modul für die Auswertung und/oder Überwachung sequenzieller Daten implementiert ist, wobei in dem Modul eine Messeinheit betrieben wird, um über einen Sensor von einem Testobjekt Messwerte aufzunehmen, weiterhin wird ein KI-Microcontroller mit einen KI-Algorithmus betrieben.

Da die KI-Technologie (künstliche Intelligenz, auch als maschinelle Intelligenz bekannt) immer zuverlässiger wird und Anwendungen in industriellen Systemen immer häufiger eingesetzt werden, besteht ein Bedarf an industrieller KI-Ausrüstung. Herkömmliche Automatisierungsgeräte wie speicherprogrammierbare Steuerungen (auch SPS genannt) verfügen nicht über die für die KI-Technologie erforderliche Rechenleistung. Cloud-basierte KI-Lösungen sind verfügbar, lassen sich jedoch nicht einfach für Shopfloor-Lösungen implementieren, das heißt, die Ergebnisse einer Cloud-basierten KI-Lösung sind möglicherweise nicht ohne weiteres im Shopfloor verfügbar.

Der Trend bei Automatisierungssystemen im Zuge der fortschreitenden Digitalisierung geht zunehmend in Richtung größerer Datenmengen. Eine Ursache für diesen Anstieg ist die Integration von Verfahren, welche die Qualität der Produkte im Prozess überwachen und sichern sollen. Die Impedanzspektroskopie ist ein Messverfahren, welches es ermöglicht, physikalische Phänomene zu beschreiben, die sich sonst mit keinem einfachen zusammenhängenden mathematischen Modell darstellen lassen. Die Interpretation der daraus resultierenden hohen Datenmenge ist jedoch nicht trivial, weswegen eine erfahrungsbasierte Auswertung mittels künstlicher Intelligenz eine Lösung bietet. Gegenwärtig ist der Trend dahingehend, KIbasierte Operationen in der Cloud durchzuführen. Dafür müssen die Daten von der Quelle über den Rückwandbus, die CPU, das übergeordnete Leitsystem an die Cloud übertragen werden. Dort werden sie ausgewertet und auf demselben Weg zurückgesendet. Die dabei entstehende Belastung für den Rückwandbus ist enorm, da dieser für eine solche Datenmenge nicht konzipiert ist. Eine Verlagerung der Analyse, in die der Datenquelle nächsten dezentrale Peripherie reduziert den Kommunikationsaufwand auf ein Minimum und sichert zusätzlich dem Anwender die Datenhoheit.

Das Modul ist ausgebildet zur sequenziellen Datenerfassung mit integrierter KI-Auswertung umfassend entweder einen Busanschluss um Messwerte entgegenzunehmen oder eine Messeinheit ausgestaltet über einen Sensor von einem Testobjekt Messwerte aufzunehmen, einen KI-Microcontroller ausgestaltet einen KI-Algorithmus aufzunehmen und abzuarbeiten, einen Datenspeicher, einen Betriebssystembaustein, weiterhin ausgestaltet für eine modulare Aufbauweise in einem Automatisierungssystem Daten über einen Rückwandbus an eine übergeordnete Einheit weiterzuleiten dass die Messeinheit ausgestaltet ist eine Messvorschrift mit zumindest folgenden Messparametern entgegenzunehmen: eine Art der Messung, eine Anzahl der gewünschten Messungen, weiterhin ausgestaltet gemäß der vorgegebenen Art der Messung die Anzahl der Messungen hintereinander durchzuführen und eine Messreihe aufzunehmen, wobei der KI-Microcontroller ausgestaltet ist zyklisch beginnend mit einer ersten Messreihe diese von der Messeinheit abzuholen und in einem Array zu speichern, weiterhin ist der KI-Microcontroller ausgestaltet den KI-Algorithmus auf die Messwerte der ersten Messreihe anzuwenden und das Ergebnis mittels des Betriebssystembaustein über den Rückwandbus auszugeben, weiterhin ausgestaltet nach Auswertung der ersten Messreihe eine weitere Messreihe aus dem Array mit dem KI-Algorithmus auszuwerten.

Es ist Aufgabe der Erfindung einem Anwender eine Unterstützung für neue Applikationen für die Ermittlung seiner Messwerte zu geben.

Die Aufgabe wird dadurch gelöst, dass das Verfahren folgende Schritte umfasst:
es wird ein Vorbereitungsmodus abgearbeitet, wobei eine Parametrierung des Moduls hinsichtlich des Sensortyps und des Messverfahrens durchgeführt wird, ein Referenzdatensatz an Messwerten für einen Sollzustand einer zu überwachenden Anlage wird aufgenommen, es werden Schwellwerte vorgegeben, welche die Messwerte im Sollzustand nicht überschreiten sollten, wobei mit den Schwellwerten ein Toleranzband erstellt wird, es wird ein Überwachungsmodus abgearbeitet,
die Applikation wird in dem Überwachungsmodus betrieben und aktuelle Messwerte werden aufgenommen oder es werden nur Messwerte aufgenommen, welche die Schwellwerte überschreiten, um die KI bzw. bzw. die neuronalen Netze robust zu trainieren, wobei dabei jeder Messwert automatisiert mit einer Marke versehen wird, wobei dies in einer Datenvorverarbeitung durchgeführt wird, die Marken an den Messwerten werden bei einem anschließenden Labeln genutzt, es wird einem Einrichter und/oder einem Anlagenbetreiber Hilfsmittel zur Verfügung gestellt, in denen die Messwerte (Mi) mit ihren Marken dargestellt und/oder aufgelistet sind, um den Einrichter und/oder Anlagenbetreiber mit dieser Darstellung und/oder Auflistung beim Labeln zu unterstützen.

Um das Labeln zu vereinfachen können mit dem KI-Algorithmus die Messwerte und die Marken ausgewertet werden, um angepasste Toleranzbänder für die anwendungsspezifische Applikation zu definieren und bei Bedarf zu erweitern.

Durch das Aufnehmen des Referenzdatensatz von Messwerten bzw. Messdaten im Normalzustand der Anlage kann man diesen Daten ein Toleranzband zuordnet werden, welches die Messwerte im Normalzustand repräsentiert.

Ein Toleranzband im Kontext der Erfindung bezieht sich auf die Bereiche oder Grenzen, innerhalb derer die Messergebnisse oder die Klassifizierungsergebnisse als akzeptabel gelten. Es handelt sich um einen Bereich, in dem die Messwerte oder Vorhersagen liegen müssen, um als korrekt oder akzeptabel betrachtet zu werden.

Zum Beispiel:
- Messgenauigkeit: In der Impedanzspektroskopie könnte ein Toleranzband die akzeptable Abweichung der gemessenen Impedanz von einem Referenzwert darstellen. Wenn die gemessenen Werte innerhalb dieses Toleranzbandes liegen, gelten sie als präzise und zuverlässig.
- Klassifizierung: Beim Einsatz von KI für die Klassifizierung von Impedanzspektren könnte ein Toleranzband die akzeptable Genauigkeit oder Fehlerquote der Klassifizierungsergebnisse darstellen. Wenn die Klassifizierungsergebnisse innerhalb dieses Toleranzbandes liegen, wird die Leistung des KI-Modells als zufriedenstellend angesehen.

Im Sinne der Erfindung versteht man unter "Labeln" oder "Labeling", bei der Auswertung von Daten mit Künstlicher Intelligenz, eine Zuweisung von Etiketten oder Kategorien zu Datenpunkten. Diese Etiketten dienen als bekannte Referenzen, die die KI-Modelle nutzen, um Muster zu erkennen und Vorhersagen zu treffen. Vor dem Training eines Modells müssen die Daten manuell gelabelt werden.

Erfindungsgemäß bezieht sich das Labeln darauf, Messdaten zu markieren und zu kategorisieren, um das anschließende Training und die Auswertung durch die KI zu erleichtern. Dies könnte beispielsweise bedeuten, dass bestimmte Anomalien oder Zustände in den Messdaten erkannt und entsprechend gelabelt werden, um die KI darauf zu trainieren, diese Zustände in zukünftigen Daten zu erkennen.

Die Erfindung bietet einen Workflow zur Integration einer KIgestützten Impedanzspektroskopie zur Überwachung und Klassifizierung von Anlagenzuständen. Dies wird durch ein neuartiges Modul erreicht, das Messdaten automatisiert mit Marken versieht und über ein KI-Modul auswertet, um Toleranzbänder zu definieren und bei Bedarf zu erweitern. Dies führt zu einer effizienten Anpassung an Kundenprozesse mit geringeren Kosten und verbessertem Performance-Management.

Dabei umfassen vorteilhafterweise die Marken eine auslösende Quelle und einen Zeitstempel.

Den Marken wird ein Markentyp zugeordnet, um zumindest folgende Kategorien zu unterscheiden
a. Intern), mit der Bedeutung, dass der Messwert das Toleranzband verlassen hat, wobei ein Interner-Markentyp zugeordnet wird,
b. Extern_a, mit der Bedeutung, dass der Messwert von Sensoren anderer Peripheriemodule stammt, wobei ein Externer-A-Markentyp zugeordnet wird, und
c. Extern_e, mit der Bedeutung, dass der Messwert von eigenen Eingängen stammt, wobei ein Externer-B-Markentyp zugeordnet wird.

Das Toleranzband wird nach einer ausreichenden Menge von Daten bzw. Messwerten als statistisch sicher betrachtet und die nachfolgenden Messwerte, die das Toleranzband verlassen, mit der entsprechenden Marke des Markentyp Interner-Markentyp versehen werden.

Das Auftreten von Ereignissen, die einen externen Markentyp darstellen, werden nachträglich mit dem vorhandenen Toleranzband verglichen und gefiltert.

Mit Vorteil wird das Auftreten eines internen Markentyps zur Erweiterung des Toleranzbandes und/oder zur Notwendigkeit der Erweiterung der Sensorik und/oder zur Identifikation einer neuen Fehlerklasse genutzt.

Mit Vorteil werden die Messwerte bzw. die Messdaten in einem Umlaufpuffer abgelegt, dadurch können sie auch nachträglich noch mit Marken versehen werden, und durch eine Konfigurierung wird, ob die Marke nachträglich den Messdaten aus der Vergangenheit oder vor dem nächsten Erfassungszyklus der Zukunft zugeordnet wird.

Das Verfahren wird vorteilhafter schrittweise ausgeführt und umfassend die Schritte:
a. Aufnahme eines Referenzdatensatzes für den Sollzustand,
b. Betrieb im Überwachungsmodus und Aufzeichnung der Messwerte,
c. Unterscheidung der Messwerte in Gut-Fall und Schlecht-Fall, wobei der Schlecht-Fall zur Erweiterung des Sollzustands oder zur Erweiterung der Fehlerklassen führt,
d. Training und Nachtrainieren der KI auf Basis der aufgenommenen Daten.

Eine Anlagen-Überwachung wird dadurch verbessert, dass die Messwerte zur Überwachung von Anlagenzuständen oder Prozessen genutzt werden, um Zustände zu erkennen, die vom normalen Betrieb abweichen.

Zusammenfassend kann man sagen, ein KI-Modul kann zur Überwachung von Anlagenzuständen oder Prozessen genutzt werden. Insbesondere sollen damit Zustände erkannt werden, die vom normalen Betrieb abweichen.

Die Einrichtung einer neuen Applikation eines KI-Moduls für die Auswertung sequenzieller Daten (z.B. für Impedanzspektroskopie) beim Kunden soll unterstützt werden. Ziel ist es, diese sonst recht aufwendige Anpassung an den Kundenprozess weitestgehend zu unterstützen. So ist es damit möglich, bei der Erfassung der Daten, diese schon mit Marken zu versehen, um das anschließende Labeln zu vereinfachen.

Die Einrichtung einer neuen Applikation eines KI-Moduls zur Auswertung sequenzieller Daten erfordert einige sorgfältige Schritte, um sicherzustellen, dass das Modul effektiv und genau arbeiten kann. Es wird eine strukturierte Vorgehensweise vorgeschlagen, um diese Einrichtung zu unterstützen:
1. Verstehen der Kundenanforderungen
   - Anforderungsanalyse: Verstehen Sie die spezifischen Bedürfnisse des Kunden, welche Prozesse oder Anlagen überwacht werden sollen und welche Zustände als abweichend betrachtet werden.
   - Datenarten und -quellen: Klären Sie, welche Datenarten (z.B. Impedanzdaten) und Datenquellen (Sensoren, Messgeräte) genutzt werden.
2. Datenaufbereitung und -erfassung
   - Datenstruktur definieren: Definieren Sie die Struktur der zu erfassenden Daten. Bei sequenziellen Daten ist es wichtig zu wissen, welche Parameter und in welchem Format erfasst werden.
   - Markierungssystem: Entwickeln Sie ein System zur Markierung der Daten während der Erfassung. Diese Markierungen helfen später beim Labeln und Training des KI-Moduls. Beispiele:
      - Normalbetrieb: Markieren Sie Daten, die den normalen Betriebszustand repräsentieren.
      - Anomalien: Markieren Sie Daten, die bekannte Abweichungen oder Fehlerzustände darstellen.
      - Übergangszustände: Markieren Sie Daten, die Übergänge zwischen verschiedenen Zuständen darstellen.
3. Datensammlung und Vorverarbeitung
   - Datenaufnahme: Implementieren Sie die Datenaufnahmeprozesse mit den definierten Markierungen. Stellen Sie sicher, dass die Daten in Echtzeit oder in regelmäßigen Intervallen erfasst werden.
   - Datenbereinigung: Bereinigen Sie die Daten von Rauschen und Ausreißern, die die Modellgenauigkeit beeinträchtigen könnten.
   - Datenformatierung: Formatieren Sie die Daten so, dass sie vom KI-Modul verarbeitet werden können (z.B. Zeitreihenformat) .
4. Labeling und Datensatzvorbereitung
   - Automatisiertes Labeling: Nutzen Sie die zuvor gesetzten Markierungen, um die Daten automatisch zu labeln. Dies beschleunigt den Prozess erheblich im Vergleich zum manuellen Labeling.
   - Datensatzaufteilung: Teilen Sie die Daten in Trainings-, Validierungs- und Testdatensätze auf, um die Leistungsfähigkeit des Modells zu evaluieren.
5. Modellentwicklung und -training
   - Modellwahl: Wählen Sie ein geeignetes Modell für die Analyse sequenzieller Daten, z.B. LSTM (Long Short-Term Memory) oder GRU (Gated Recurrent Unit) für Zeitreihendaten.
   - Training: Trainieren Sie das Modell mit den gelabelten Daten. Stellen Sie sicher, dass es genügend Daten aus allen relevanten Zuständen gibt, um das Modell robust zu machen.
   - Hyperparameter-Tuning: Optimieren Sie die Hyperparameter des Modells, um die Genauigkeit zu maximieren.
6. Modellvalidierung und -test
   - Validierung: Validieren Sie das Modell mit dem Validierungsdatensatz und justieren Sie das Modell basierend auf den Ergebnissen.
   - Testing: Testen Sie das Modell mit einem unabhängigen Testdatensatz, um die Generalisierungsfähigkeit sicherzustellen.
7. Implementierung und Überwachung
   - Einsatz: Implementieren Sie das trainierte Modell in die Produktionsumgebung des Kunden.
   - Echtzeitüberwachung: Richten Sie eine Echtzeitüberwachung ein, umlaufend Daten zu erfassen und das Modell zu nutzen, um Anomalien zu erkennen.
   - Feedback-Schleife: Implementieren Sie eine Feedback-Schleife.

Das automatisierte setzten der Marken zu den Messwerten hilft dem Anwender des Moduls später und erleichtert eine Inbetriebnahme.

Marken sind entscheidend, um den Prozess des Labelns von Daten effizienter und präziser zu gestalten. Hier sind einige spezifische Wege, wie Marken beim Labeln helfen können:
1. Automatisierung des Labeling-Prozesses
   - Automatisierte Zuordnung: Wenn Daten während der Erfassung mit Marken versehen werden, können diese Marken später verwendet werden, um die Daten automatisch zu labeln. Dies reduziert den manuellen Arbeitsaufwand erheblich.
   - Konsistenz: Automatisiertes Labeling basierend auf vordefinierten Marken stellt sicher, dass die Daten konsistent gelabelt werden, was wichtig für die Modellgenauigkeit ist.
2. Effizienzsteigerung
   - Schnelleres Labeling: Marken ermöglichen es, große Datenmengen schneller zu labeln, da Sie nicht jeden Datenpunkt manuell überprüfen müssen.
   - Batch-Labeling: Datenpunkte, die mit denselben Marken versehen sind, können in Batches gelabelt werden, was den Prozess weiter beschleunigt.
3. Genauigkeit und Präzision
   - Reduzierung menschlicher Fehler: Automatisiertes Labeling basierend auf Marken minimiert menschliche Fehler, die beim manuellen Labeln auftreten können.
   - Klare Trennung: Marken helfen, klare Trennungen zwischen verschiedenen Zuständen oder Ereignissen in den Daten zu schaffen, was die Präzision des Labelings erhöht.
4. Datenorganisation
   - Kategorisierung: Marken ermöglichen eine einfache Kategorisierung der Daten. Zum Beispiel können Sie Daten in Kategorien wie "Normalbetrieb", "Anomalie", "Übergangszustand" usw. einteilen.
   - Einfachere Suche und Filterung: Marken erleichtern das Auffinden und Filtern bestimmter Datenpunkte, was besonders nützlich ist, wenn Sie spezifische Zustände analysieren möchten.
5. Unterstützung für Modelltraining und -validierung
   - Ausbalancierte Datensätze: Mit Marken können Sie sicherstellen, dass Ihr Trainingsdatensatz ausgewogen ist, indem Sie sicherstellen, dass alle wichtigen Zustände und Anomalien ausreichend vertreten sind.
   - Validierung und Testen: Marken ermöglichen es, separate Validierungs- und Testdatensätze zu erstellen, die repräsentativ für die verschiedenen Betriebszustände sind.
6. Echtzeit-Anwendungen
   - Echtzeit-Labeling: In Echtzeitanwendungen können Marken verwendet werden, um eingehende Daten sofort zu labeln, was für Echtzeit-Überwachung und -Erkennung von Anomalien entscheidend ist.
   - Schnelle Reaktion: Echtzeit-Markierungen ermöglichen es dem System, schneller auf Abweichungen vom Normalbetrieb zu reagieren, indem es sofortige Benachrichtigungen oder Aktionen auslöst.

### Beispiel: Anwendung der Marken beim Impedanzspektroskopie-Modul

Angenommen, Sie überwachen den Zustand einer Maschine mittels Impedanzspektroskopie und haben folgende Marken definiert:
- Normalbetrieb (Marke: "Normal")
- Leichte Anomalie (Marke: "Anomalie_Leicht")
- Schwere Anomalie (Marke: "Anomalie_Schwer")Während der Datenerfassung markieren Sie Datenpunkte entsprechend diesen Zuständen. Später, wenn Sie die Daten labeln:
- Automatisierte Zuordnung: Alle Datenpunkte mit der Marke "Normal" werden automatisch mit dem Label "Normalbetrieb" versehen.
- Effizientes Batch-Labeling: Alle Datenpunkte mit der Marke "Anomalie_Leicht" werden in einem Schritt als "Leichte Anomalie" gelabelt.

Die Zeichnung zeigt ein Ausführungsbeispiel der Erfindung, dabei zeigt die
- FIG 1: ein Modul ausgebildet zur sequenziellen Datenerfassung mit integrierter KI-Auswertung,
- FIG 2: ein erstes Flussdiagramm und
- FIG 3: ein zweites Flussdiagramm.

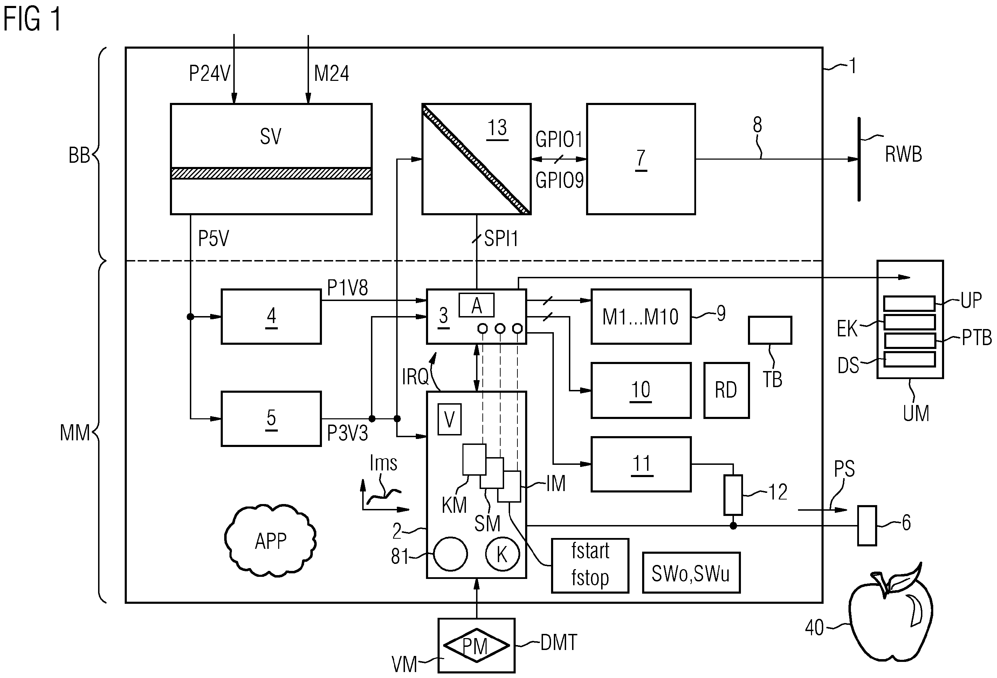

Gemäß FIG 1 ist ein Modul 1 zur sequenziellen Datenerfassung mit einer integrierten KI-Auswertung dargestellt. Das Modul 1 gliedert sich in ein Basisboard BB und ein Messmodul MM. Das Basismodul BM weist eine Stromversorgungseinheit SV auf, welche extern mit 24 Volt P24V und einen Masseanschluss M24 versorgt wird. Des Weiteren weist die Stromversorgungseinheit SV einen Spannungswandler auf, welcher eine konstante Spannung von 5 Volt ausgibt. Für allgemeine Steuerungs- und Koordinierungsaufgaben das Basisboard BB und das Messmodul MM betreffend, weist das Basisboard BB einen Betriebssystem-Baustein 7 auf. Der Betriebssystem-Baustein 7 ist zum einen an einen Rückwandbus-Anschluss 8 angeschlossen und zum anderen über interne Datenkommunikationsleitungen, beispielsweise GPIO1 bis GPIO9 (General Purpose Input Output) mit einem Trennungsbaustein 13 zur galvanischen Trennung der Signale verbunden. Der Trennungsbaustein 13 ist in diesem Fall als ein Magnetkoppler ausgestaltet. Der Rückwandbus-Anschluss 8 des Betriebssystem-Baustein 7 ist dementsprechend an einen Rückwandbus RWB angeschlossen. Der Rückwandbus RWB dient bei einem modular aufgebauten Automatisierungssystem zur Aufnahme von weiteren Modulen, Ein-/Ausgabebaugruppen, Technologiebaugruppen usw. darüber hinaus verbindet der Rückwandbus RWB die erwähnten Module mit einer übergeordneten speicherprogrammierbaren Steuerung.

Das in das Modul 1 integrierte Messmodul MM hat zum Basismodul zum einen eine Versorgungsspannungsverbindung P5V und zum anderen eine Datenverbindung SPI. Ein erster Spannungsregler 4 auf dem Messmodul MM stellt für die nachfolgenden Bausteine eine konstante Spannung von 1,8 Volt bereit. Ein zweiter Spannungsregler 5 stellt für die nachfolgenden Bausteine eine konstante Spannung von 3,3 Volt bereit.

Das Herzstück des Messmoduls MM ist ein freiprogrammierbarer KI-Controller 3 und eine ebenfalls frei programmierbare Messeinheit 2. Der KI-Microcontroller 3 und die Messeinheit 2 sind ebenfalls über interne Datenleitungen, nämlich SPI (Serial Peripheral Interface), miteinander verbunden. Die Messeinheit 2 ist ausgestaltet, über einen Sensor 6 von einem Testobjekt 40 Messwerte aufzunehmen. Der KI-Microcontroller 3 ist ausgestaltet einen KI-Algorithmus aufzunehmen und abzuspeichern. Ein Datenspeicher 9 kann dazu genutzt werden, Messreihen zwischenzuspeichern. Die Messeinheit 2 ist ausgestaltet eine Messvorschrift V mit zumindest folgenden Messparametern entgegenzunehmen. Eine Art KM, SM, IM der Messung, wobei KM einer Körperschallmessung entsprechen soll, SM einer Schwingungsmessung entsprechen soll, IM einer Impedanzmessung nach dem Prinzip der Impedanzspektroskopie entsprechen soll. Das bedeutet, über die vorgebbare Messvorschrift V kann die Messeinheit 2 für bestimmte Anwendungsfälle frei programmiert werden. Darüber hinaus wird der Messeinheit 2 eine Anzahl K der hintereinander durchzuführenden Messungen mitgeteilt. Der KI-Microcontroller 3 ist dabei dazu ausgestaltet zyklisch beginnend mit einer ersten Messreihe M1 diese von der Messeinheit 2 abzuholen und in einem Array A zu speichern. Die gestrichelten Linien zwischen dem KI-Microcontroller 3 und der Messeinheit 2 bedeuten, dass bei einer Programmierung beispielsweise für die Art KM, welcher einer Körperschallmessung entspricht, der KI-Microcontroller 3 und die Messeinheit 2 miteinander gemeinsam programmiert bzw. parametriert sind, um die entsprechende Wechselwirkung bei der Messung und Auswertung bezüglich der späteren Neuronalen Netze zusammenzuwirken.

Der KI-Microcontroller 3 ist dazu ausgestaltet, den KI-Algorithmus auf die Messwerte der ersten Messreihe M1 und natürlich auf die weiteren Messreihen anzuwenden und das Ergebnis mittels des Betriebssystembausteins 7 über den Rückwandbus RWB auszugeben. Als besonderer Vorteil bei dieser Ausgestaltung wird es angesehen, dass die KI-Auswertung direkt nach Aufnahme einer Messreihe in den KI-Microcontroller 3 durchgeführt wird. Dies ermöglicht eine schnelle, speichersparende sequenzielle Abarbeitung vor Ort. Weiterhin ist der KI-Microcontroller 3 ausgestaltet, nach Auswertung der ersten Messreihe M1 eine weitere Messreihe M2,...,M10 aus dem Array A mit dem KI-Algorithmus auszuwerten.

Von Vorteil ist es, dass der KI-Microcontroller 3 ausgestaltet ist, mittels einer Engineering Station für die jeweilige Art KM,SM,IM der Messung parametriert zu werden und somit für eine Körperschallmessung, eine Schwingungsmessung oder Impedanzmessung parametriert ist.

Zur Unterstützung für eine Einrichtung einer anwendungsspezifischen Applikation App, welche in dem Modul 1 für die Auswertung und/oder Überwachung sequenzieller Daten implementiert ist, wobei in dem Modul die Messeinheit 2 betrieben wird um über den Sensor 6 von dem Testobjekt 40 Messwerte Mi aufnimmt, wird mit einem Parametriertool PMT ein Vorbereitungsmodus VM abgearbeitet, wobei eine Parametrierung des Moduls 1 hinsichtlich des Sensortyps und des Messverfahrens durchgeführt wird, ein Referenzdatensatz RD an Messwerten für einen Sollzustand einer zu überwachenden Anlage wird aufgenommen, es werden Schwellwerte SWo, SWu vorgegeben, welche die Messwerte im Sollzustand nicht überschreiten sollte, wobei mit den Schwellwerten SWo, SWu ein Toleranzband TB erstellt wird.

Mit einem Überwachungsmittel wird ein Überwachungsmodus UM abgearbeitet, die Applikation App wird in dem Überwachungsmodus UM betrieben und aktuelle Messwerte werden aufgenommen, wobei dabei jeder Messwert automatisiert mit einer Marke versehen wird, wobei dies in einer Datenvorverarbeitung durchgeführt wird, die Marken an den Messwerten werden bei einem anschließenden Labeln genutzt, um das Labeln zu vereinfachen.

In einer anderen Ausgestaltungsvariante ist das Modul ausgestaltet über den Rückwandbus Messwerte von einer anderen Anlage oder einem anderen Modul entgegenzunehmen und zu verarbeiten oder aufzubereiten.

Um einem Einrichter oder einem Anlagenbetreiber größtmögliche Unterstützung zu geben, ist in dem Modul 1 ein Software-Baustein implementiert, in welchem die Messwerte mit ihren Marken MTi,MTa,MTb, z.B. grafisch dargestellt werden oder als eine CSV-Datei oder Excel-Tabelle für den Einrichter ausgegeben werden. Dies ist dann das Hilfsmittel, welches den Einrichter beim Labeln unterstützt.

Mit dem KI-Algorithmus werden die Messwerte und die Marken ausgewertet, um angepasste Toleranzbänder TB` für die anwendungsspezifische Applikation App zu definieren und bei Bedarf zu erweitern.

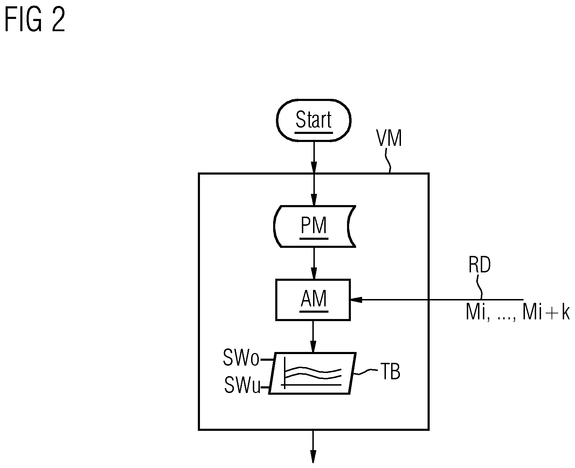

Die FIG 2 illustriert den Vorbereitungsmodus VM des Verfahrens. Das Modul 1 wird hinsichtlich des Sensortyps und des Messverfahrens parametriert. Ein Referenzdatensatz RD an Messwerten Mi wird aufgenommen, um einen Sollzustand, der zu überwachenden Anlage, festzulegen. Schwellwerte SWo,SWu werden vorgegeben, die die Messwerte Mi im Sollzustand nicht überschreiten sollten. Mit diesen Schwellwerten SWo,SWu wird ein Toleranzband TB erstellt.

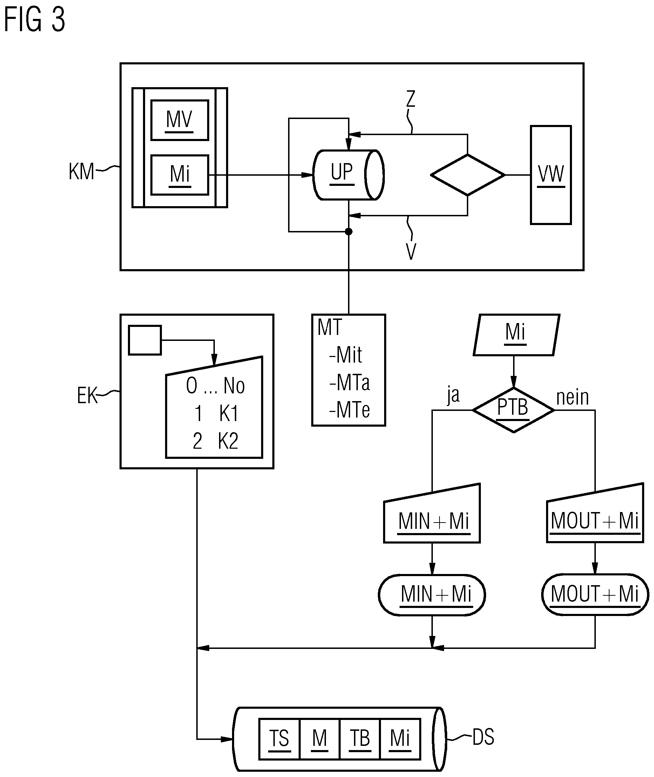

Die FIG 3 zeigt ein Flussdiagramm für einen Überwachungsmodus UM des Verfahrens. Die Applikation App wird in diesem Modus betrieben und aktuelle Messwerte Mi werden über eine Messvorrichtung MV aufgenommen. Jeder Messwert Mi wird automatisiert mit einer Marke versehen, was durch eine Datenvorverarbeitung erfolgt. Diese Marken werden bei einem anschließenden Labeln genutzt, um das Labeln zu vereinfachen. Der KI-Algorithmus wertet die Messwerte und Marken aus, um angepasste Toleranzbänder TB` für die anwendungsspezifische Applikation App zu definieren und bei Bedarf zu erweitern.

FIG 3 zeigt die Struktur der Marken, die den Messwerten zugeordnet werden. Jede Marke umfasst eine auslösende Quelle und einen Zeitstempel. Ein Markentyp MT wird zugeordnet, um mindestens folgende Kategorien zu unterscheiden: Interner-Markentyp Mit, Extern_a-Markentyp MTa und Extern_e-Markentyp MTe.

Nach einer ausreichenden Menge von Daten wird das Toleranzband TB als statistisch sicher betrachtet. Nachfolgende Messdaten, die das Toleranzband TB verlassen, werden mit der entsprechenden Marke MTi,MTa,MTb des Markentyps Mit versehen. Auch können die Messwerte Mi mit einem Toleranzband-Prüfmittel untersucht werden und es werden Pärchen gebildet aus Marle und Messwert zum einen MIN + Mi und zum anderen MOUT + Mi.

Ereignisse, die einen externen Markentyp darstellen, werden nachträglich mit dem vorhandenen Toleranzband TB verglichen und gefiltert werden.

FIG 3 zeigt die Schritte zur Erweiterung des Toleranzbandes TB bei Auftreten eines internen Markentyps. Dies kann zur Notwendigkeit der Erweiterung der Sensorik und/oder zur Identifikation einer neuen Fehlerklasse führen.

Ein Umlaufpuffers UP zur Ablage der Messdaten Mi wird verwendet. Es kann konfiguriert werden, ob die Marke nachträglich den Messdaten aus der Vergangenheit V oder vor dem nächsten Erfassungszyklus der Zukunft Z zugeordnet wird.

In einem Datenspeicher DS wird ein Messwert Mi, ein zugehöriges Toleranzband, eine Marke M und ein Zeitstempel TS abgelegt.

## Patentansprüche

1. Verfahren zur Unterstützung für eine Einrichtung einer anwendungsspezifischen Applikation (App), welche in einem Modul (1) für die Auswertung und/oder Überwachung sequenzieller Daten implementiert ist, wobei das Modul (1) ausgestaltet ist Messwerte (Mi) zu verarbeiten, weiterhin wird ein KI-Microcontroller (3) mit einen KI-Algorithmus betrieben, **dadurch gekennzeichnet, dass** das Verfahren folgende Schritte umfasst:
es wird ein Vorbereitungsmodus (VM) abgearbeitet, wobei
- eine Parametrierung (PM) des Moduls (1) hinsichtlich des Sensortyps und des Messverfahrens durchgeführt wird,
- ein Referenzdatensatz (RD) an Messwerten für einen Sollzustand einer zu überwachenden Anlage wird aufgenommen,
- es werden Schwellwerte (SW) vorgegeben, welche die Messwerte (Mi) im Sollzustand nicht überschreiten sollen, wobei mit den Schwellwerten (SW) ein Toleranzband (TB) erstellt wird,
es wird ein Überwachungsmodus (UM) abgearbeitet,
- die Applikation (App) wird in dem Überwachungsmodus (UM) betrieben und aktuelle Messwerte (Mi) werden aufgenommen oder es werden nur die Messwerte (Mi) aufgenommen, welche die Schwellwerte (SW) überschreiten,
- wobei dabei jeder Messwert (Mi) automatisiert mit einer Marke (MTi,MTa,MTb) versehen wird, wobei dies in einer Datenvorverarbeitung (DV) durchgeführt wird, die Marken (MTi,MTa,MTb) an den Messwerten (Mi) werden bei einem anschließenden Labeln genutzt, um das Labeln zu vereinfachen, das einem Einrichter und/oder einem Anlagenbetreiber Hilfsmittel zur Verfügung gestellt werden, in denen die Messwerte (Mi) mit ihren Marken (MTi,MTa,MTb) dargestellt und/oder aufgelistet sind, um den Einrichter und/oder Anlagenbetreiber mit dieser Darstellung und/oder Auflistung beim Labeln zu unterstützen.

2. Verfahren nach Anspruch 1, wobei die Marken (MTi,MTa,MTb) eine auslösende Quelle (Q) und einen Zeitstempel umfassen.

3. Verfahren nach Anspruch 1 oder 2, wobei den Marken (MTi,MTa,MTb) ein Markentyp (MT) zugeordnet wird, um zumindest folgende Kategorien zu unterscheiden
a. Intern), mit der Bedeutung, dass der Messwert das Toleranzband verlassen hat, wobei ein Interner-Markentyp (MTi) zugeordnet wird,
b. Extern_a, mit der Bedeutung, dass der Messwert von Sensoren anderer Peripheriemodule stammt, wobei ein Externer-A-Markentyp (MTa) zugeordnet wird, und
c. Extern_e (MTe), mit der Bedeutung, dass der Messwert von eigenen Eingängen stammt, wobei ein Externer-B-Markentyp (MTb) zugeordnet wird.

4. Verfahren nach Anspruch 3, wobei das Toleranzband (TB) nach einer ausreichenden Menge von Daten als statistisch sicher betrachtet wird und die nachfolgenden Messdaten (Mi), die das Toleranzband (TB) verlassen, mit der entsprechenden Marke (MTi,MTa,MTb) des Markentyp (MT) Interner-Markentyp (MTi) versehen werden.

5. Verfahren nach Anspruch 4, wobei das Auftreten von Ereignissen, die einen externen Markentyp darstellen, nachträglich mit dem vorhandenen Toleranzband (TB) verglichen und gefiltert werden.

6. Verfahren nach Anspruch 4, wobei das Auftreten eines internen Markentyps (MTi) zur Erweiterung des Toleranzbandes (TB) und/oder zur Notwendigkeit der Erweiterung der Sensorik und/oder zur Identifikation einer neuen Fehlerklasse (FK) genutzt wird.

7. Verfahren nach Anspruch 1, wobei die Messwerte in einem Umlaufpuffer (UP) abgelegt werden und durch Konfigurierung festgelegt werden kann, ob den Messwerten aus der Vergangenheit die Marke (MTi,MTa,MTb) nachträglich oder vor dem nächsten Erfassungszyklus der Zukunft zugeordnet wird.

8. Verfahren nach Anspruch 1, umfassend die Schritte:
a. Aufnahme eines Referenzdatensatzes für den Sollzustand,
b. Betrieb im Überwachungsmodus (UW) und Aufzeichnung der Messwerte (Mi),
c. Unterscheidung der Messwerte (Mi) in Gut-Fall und Schlecht-Fall, wobei der Schlecht-Fall zur Erweiterung des Sollzustands oder zur Erweiterung der Fehlerklassen führt,
d. Training und Nachtrainieren der KI auf Basis der aufgenommenen Messwerte (Mi).

9. Verfahren nach Anspruch 1, wobei die Messwerte zur Überwachung von Anlagenzuständen oder Prozessen genutzt werden, um Zustände zu erkennen, die vom normalen Betrieb abweichen.

10. Verfahren nach einem der Ansprüche 1 bis 9, wobei mit dem KI-Algorithmus die Messwerte (Mi) und die Marken (MTi,MTa,MTb) ausgewertet werden, um angepasste Toleranzbänder (TB`) für die anwendungsspezifische Applikation (App) zu definieren und bei Bedarf zu erweitern.
